# EUROPÄISCHE PATENTSCHRIFT

(11) **EP 3 686 152 B1**
(45) Veröffentlichungstag und Bekanntmachung des Hinweises auf die Patenterteilung: **07.04.2021**
(21) Anmeldenummer: 20153530.9
(22) Anmeldetag: 24.01.2020
(51) Int. Cl.: B66F 9/20

(54) **BEDIENKOPF FÜR EIN FLURFÖRDERZEUG**
OPERATING HEAD FOR AN INDUSTRIAL TRUCK
TÊTE DE COMMANDE POUR UN CHARIOT DE MANUTENTION

(30) Priorität: 25.01.2019 DE 102019101863
(43) Veröffentlichungstag der Anmeldung: 29.07.2020
(73) Patentinhaber: Jungheinrich Aktiengesellschaft, 22047 Hamburg (DE)
(72) Erfinder: LOHMANN, Helmut, 27404 Gyhum (DE); SCHÜLER, Michael, 24558 Wakendorf II (DE); BRUNCKHORST, Holger, 22844 Norderstedt (DE); KNIE, Andreas, 20255 Hamburg (DE)
(74) Vertreter: Hauck Patentanwaltspartnerschaft mbB

(56) Entgegenhaltungen:
- EP-A1- 1 400 429
- EP-A1- 3 034 378
- DE-A1-102006 008 038
- DE-A1-102014 007 078
- GB-A- 2 460 659

## Beschreibung

Die Erfindung betrifft einen Bedienkopf für ein Flurförderzeug, umfassend ein sich entlang einer Längsachse erstreckendes Horn mit sich auf gegenüberliegenden Seiten des Horns von der Längsachse forterstreckenden Tragabschnitten, und umfassend mit dem Horn verbundene Griffe mit jeweils gegenüberliegend der Tragabschnitte angeordneten Greifabschnitten, wobei die einander gegenüberliegenden Tragabschnitte und Greifabschnitte jeweils durch eine Grifföffnung voneinander beabstandet sind, wobei an zumindest einem der Tragabschnitte mindestens ein Bedienelement angeordnet ist.

Flurförderzeuge, wie beispielsweise Hubwagen, weisen derartige Bedienköpfe zur Lenkung des Flurförderzeugs auf. Der Bedienkopf kann beispielsweise an einem länglichen Deichselstil angeordnet sein und gemeinsam mit dem Deichselstil über zwei zueinander senkrechte Achsen verschränkt werden. Eine solche Deichsel ist zumeist bei Mitgängerfahrzeugen vorgesehen, bei denen die Bedienperson unter Eingriff in den Bedienkopf mit dem Flurförderzeug mitläuft. Der Bedienkopf wird hierbei auch als Deichselkopf bezeichnet. Auch kann ein Bedienkopf der eingangs genannten Art an einer Lenksäule angeordnet lediglich um eine durch den Bedienkopf verlaufende Drehachse drehbar sein, ansonsten aber gegenüber dem Flurförderzeug neigefest angeordnet sein. Solche Bedienköpfe werden meist bei Flurförderzeugen eingesetzt, bei denen eine Bedienperson beispielsweise auf einer Standplattformen stehend mit dem Flurförderzeug mitfährt. Während die Lenkung des Flurförderzeugs in beiden Fällen über das Neigen bzw. Drehen des Bedienkopfes relativ zum Flurförderzeug realisiert wird, werden weitere Funktionen über an dem Bedienkopf angeordnete Bedienelemente ausgeführt. Beispielsweise können über solche Bedienelemente die Geschwindigkeit der Vorwärts- oder Rückwärtsfahrt gesteuert oder Lastmittel des Flurförderzeugs angehoben oder gesenkt werden.

Bedienköpfe der eingangs genannten Art sind beispielsweise bekannt aus EP 07 51 060 A1 und DE 2 008 550 U1. In beiden Dokumenten sind Deichselköpfe beschrieben, die als Schalttaster ausgebildete Bedienelemente in ihren Tragabschnitten aufweisen. Eine Bedienung über solche Schalttaster ist aufwendig, insbesondere kann mit jedem Schalttaster lediglich eine Funktion ausgeführt werden. Beispielsweise kann über einen Schalttaster das Heben des Lastteils und über einen anderen Schalter das Senken des Lastteils erfolgen. An einem freien Ende des Horns dieser Bedienköpfe sind zudem um eine Drehachse drehbar gelagerte Fahrerschaltgriffe angeordnet.

DE 10 352 695 A1 beschreibt eine Deichsel mit einem Bedienkopf, der an seinen Tragabschnitten paddelförmige Schaltwippen aufweist, die um eine Lagerachse verkippt werden können. Mittels einer dieser Schaltwippen kann beispielsweise ein Lastteil gehoben oder abgesenkt werden. Um zwischen diesen beiden Funktionen zu wechseln, muss eine Bedienperson, die mit ihrer Hand den gegenüberliegenden Greifabschnitt umgreift, ihre Griffposition jedoch umständlich ändern. Die Bewegung der Schaltwippe führt zudem zu einer wenig intuitiven Bedienung.

DE 10 2014007078 A1 betrifft einen Bedienkopf gemäß dem Oberbegriff des Anspruchs 1 mit tastenartigen Bedienelementen an den Tragabschnitten, wobei mit dem Finger zu kontaktierende Angriffsflächen dieser Bcdicnclcmcntc vom Bedienkopf nach oben fortweisen. Diese Bedienelemente sind für eine Bedienperson, die mit ihrer Hand den gegenüberliegenden Greifabschnitt umgreift, schwer zugänglich, insbesondere bei einer aufrechten Stellung eines den Bedienkopf tragenden Deichselstils. Ausgehend von dem erläuterten Stand der Technik liegt der Erfindung die Aufgabe zugrunde, einen Bedienkopf für ein Flurförderzeug bereitzustellen, der eine intuitive Bedienung bei guter Zugänglichkeit von an den Tragabschnitten angeordneten Bedienelementen ermöglicht.

Die Erfindung löst die Aufgabe durch einen Bedienkopf gemäß Anspruch 1. Vorteilhafte Ausgestaltungen sind Gegenstand der Unteransprüche, der Beschreibung, sowie der Figuren.

Für einen Bedienkopf der eingangs genannten Art löst die Erfindung die Aufgabe dadurch, dass das mindestens eine Bedienelement zylinderförmig ausgebildet ist mit einer sich von der Zylinderlängsachse radial forterstreckenden Ausbuchtung, die zumindest in einer Ruhestellung des Bedienelements zu dem gegenüberliegenden Greifabschnitt des Griffs hinweist, wobei durch Angriff an der Ausbuchtung das Bedienelement um seine Zylinderachse verschwenkbar ist.

Der Bedienkopf kann, wie eingangs bereits erläutert, über einen neigbaren Deichselstil oder in nicht neigbarer Weise mit einem Flurförderzeug verbunden sein. In beiden Fällen ist der Bedienkopf jedoch um eine Drehachse relativ zum Flurförderzeug drehbar. Durch eine Drehung um diese Drehachse erfolgt eine Lenkung des Flurförderzeugs nach links oder rechts. Das sich entlang einer Längsachse erstreckende Horn des Bedienkopfes kann mit einem ersten Ende zur Befestigung am Flurförderzeug bzw. an weiteren Deichselelementen, wie beispielsweise einem Deichselstil, ausgebildet sein. Ein dem ersten Ende auf der Längsachse gegenüberliegendes zweites Ende des Horns kann ein freies Ende sein. Dieses freie Ende kann bei Verwendung eines Flurförderzeugs mit einem solchen Bedienkopf insbesondere in Richtung der Bedienperson zeigen. An dem freien Ende des Horns können ebenfalls Bedienelemente vorgesehen sein, beispielsweise Fahrerschaltgriffe zur Steuerung einer Vorwärtsbewegung bzw. einer Rückwärtsbewegung des Flurförderzeugs. Insbesondere von einem zwischen dem ersten Ende und den zweiten Ende liegenden zentralen Abschnitt des Horns können sich die beiden Tragabschnitte auf gegenüberliegenden Seiten von der Längsachse forterstrecken. An den Tragabschnitten sind jeweils Griffe getragen, die jeweils einen Greifabschnitt aufweisen. Die Griffe können jeweils beidseitig des Horns an die Tragabschnitte anschließen, wobei die Griffe dann jeweils über einen sich von dem Tragabschnitt fortweisenden Schenkelabschnitt verfügen können, an den jeweils einer der Greifabschnitte in Richtung der Längsachse weisend übergeht. Die Schenkelabschnitte können sich jeweils von ihren Tragabschnitten forterstrecken und können insbesondere in etwa parallel zu der Längsachse verlaufen. Die Greifabschnitte können in einem Winkel zu ihrem jeweiligen Schenkelabschnitt verlaufen, insbesondere in einem im Wesentlichen rechten Winkel. Die beiden Greifabschnitte weisen dabei wieder in Richtung zu der Längsachse hin, können insbesondere in etwa senkrecht zu der Längsachse verlaufen. Die Greifabschnitte können sich von gegenüberliegenden Seiten zu dem freien Ende des Horns hinerstrecken. Tragabschnitt, Schenkelabschnitt und Greifabschnitt sowie insbesondere das freie Ende des Horns können dann zwischen sich die Grifföffnung begrenzen. Auch können die Greifabschnitte an dem freien Ende des Horns angeordnet sein und sich auf gegenüberliegenden Seiten von dem freien Ende des Horns forterstrecken. Die Grifföffnungen können dann durch Tragabschnitt, Greifabschnitt und das freie Ende des Horns begrenzt und insbesondere zu den Seiten offen sein. Eine den Bedienkopf verwendende Bedienperson kann mit ihren Händen jeweils in die Grifföffnungen eingreifen. Insbesondere kann eine Bedienperson mit einer Hand einen der Greifabschnitte umgreifen und insbesondere mit Zeige- oder Mittelfinger das an dem dem Greifabschnitt gegenüberliegenden Tragabschnitt angeordnete Bedienelement bedienen.

An zumindest einem der Tragabschnitte ist erfindungsgemäß zumindest ein zylinderförmiges Bedienelement angeordnet, welches um seine Zylinderachse verschwenkbar ist. Die Zylinderachse kann sich in einem Winkel zu der Längsachse des Horns oder zu einer Erstreckungsachse des gegenüberliegenden Greifabschnitts, insbesondere in einem Winkel zu der Längsachse des Horns und der Erstreckungsachse des gegenüberliegenden Greifabschnitts, erstrecken. Das mindestens eine zylinderförmige Bedienelement kann von seinem Tragabschnitt in die angrenzende Grifföffnung hineinragen, insbesondere mit seiner Ausbuchtung.

Die Ausbuchtung bezeichnet eine Erhebung des Bedienelements in radialer Richtung. Im Bereich der Ausbuchtung kann das Bedienelement von der Zylinderform abweichen. Die Ausbuchtung erstreckt sich dabei derart radial von der Zylinderachse des Bedienelements fort, dass sie zumindest in einer Ruhestellung des Bedienelements zu demjenigen Greifabschnitt hinweist, welcher dem das Bedienelement tragenden Tragabschnitt gegenüberliegt. Die Ausbuchtung kann in der Ruhestellung insbesondere in die angrenzende Grifföffnung hineinweisen. Bei einer Auslenkung des Bedienelements aus der Ruhestellung heraus um die Zylinderachse, kann die Ausbuchtung entsprechend in andere Richtungen weisen. Aufgrund der zylinderförmigen Ausbildung des Bedienelements mit der in Richtung des Greifabschnitts weisenden Ausbuchtung kann das Bedienelement besonders einfach durch die Finger einer Bedienperson gegriffen werden, die mit ihrer Hand den gegenüberliegenden Greifabschnitt umgreift. Insbesondere kann eine Bedienperson mit zwei Fingern, beispielsweise mit dem Daumen und dem Zeigefinger, die Ausbuchtung von gegenüberliegenden Seiten angreifen und so das Bedienelement zwischen ihren Fingern halten. Auch beim Verschwenken des Bedienelements um die Zylinderlängsachse kann die Bedienperson mit beiden Fingern den Kontakt zu der Ausbuchtung wahren und somit stets eine gute Kontrolle über das Bedienelement beibehalten. Das Bedienelement ist somit besonders gut zugänglich und die Bedienung sehr intuitiv.

Nach einer Ausgestaltung ist bei Umgreifen des der Ausbuchtung gegenüberliegenden Greifabschnitts durch die Hand einer Bedienperson das Bedienelement über seine Ausbuchtung von zwei gegenüberliegenden Seiten mit den Fingern dieser Hand greifbar. Wie bereits erläutert, kann die Ausbuchtung beispielsweise mit Daumen und Zeigefinger von gegenüberliegenden Seiten gegriffen werden und das Bedienelement somit einfach und intuitiv verstellt werden. Das Bedienelement ist also insbesondere entsprechend nah an den gegenüberliegenden Greifabschnitt angeordnet, sodass eine Bedienperson mit zumindest durchschnittlicher Handgröße, die den Greifabschnitt mit ihrer Hand umgreift, mit Daumen- und Zeige- oder Mittelfinger die Ausbuchtung des Bedienelements greifen kann.

Nach einer Ausgestaltung ist das mindestens eine Bedienelement in beiden, einander entgegengesetzten Drehrichtungen um seine Zylinderlängsachse verschwenkbar ausgebildet. Das Bedienelement kann somit in beiden Richtungen um die Zylinderlängsachse geschwenkt werden, insbesondere wenn es im Bereich der Ausbuchtung von gegenüberliegenden Seiten mit zwei Fingern gegriffen wird. Es werden so bei einem einfach erreichbaren Bedienelement zwei Funktionen vereint, die ohne die Notwendigkeit eines Umgreifens der Hand des Bedieners oder einer Neupositionierung der Finger des Bedieners ausgeführt werden können. Beispielsweise kann bei einer Drehung in einer ersten Drehrichtung um die Zylinderlängsachse ein Lastteil eines Flurförderzeugs hebbar sein, während bei einer Drehung in entgegengesetzter Drehrichtung das Lastteil absenkbar ist. Somit kann das Bedienelement die Hubfunktion und die Senkfunktion in sich vereinen. Das Bedienelement kann durch entsprechenden Angriff von der Ausbuchtung jedoch auch durch nur einen Finger bedienbar sein.

Nach einer Ausgestaltung ragt das mindestens eine Bedienelement zumindest abschnittsweise aus dem Tragabschnitt hinaus, wobei der aus dem Tragabschnitt hinausragende Abschnitt des Bedienelements vollständig in der angrenzenden Grifföffnung aufgenommen ist. Das Bedienelement ist um seine Zylinderlängsachse verschwenkbar an dem Tragabschnitt gelagert, wie eingangs erwähnt. Zur Erreichbarkeit des Bedienelements ragt dieses zumindest abschnittsweise aus dem Tragabschnitt hinaus. Nach dieser Ausgestaltung ragt das Bedienelement, insbesondere mit seiner Ausbuchtung, bevorzugt zumindest in der Ruhestellung des Bedienelements in Richtung des gegenüberliegenden Greifabschnitts hinaus. Zumindest in der Ruhestellung, bevorzugt jedoch auch in allen möglichen Verwendungsstellungen, ist der aus dem Tragabschnitt hinausragende Abschnitt des Bedienelements vollständig in der angrenzenden Grifföffnung aufgenommen. Das Bedienelement ragt somit insbesondere nicht aus der Grifföffnung hervor. Beispielsweise kann das Bedienelement aus einer dem gegenüberliegenden Greifabschnitt zugewandten, die Grifföffnung abschnittsweise begrenzenden Seitenwand des Tragabschnitts hinausragen. Durch die vollständige Aufnahme des Bedienelements innerhalb der Grifföffnung ist das Bedienelement für eine dem gegenüberliegenden Greifabschnitt umgreifende Hand besonders gut mit den Fingern erreichbar, insbesondere in allen möglichen Stellungen des Bedienelements.

Nach einer diesbezüglichen Ausgestaltung ragt das Bedienelement derart aus dem Tragabschnitt hinaus, dass zumindest 50 % der Mantelfläche des Bedienelements freiliegen. Damit ist gemeint, dass der aus dem Tragabschnitt hinausragende Abschnitt des Bedienelements, insbesondere einschließlich der Ausbuchtung, zumindest 50 % der Oberfläche des Bedienelements ausmacht. Die genannte Fläche bezeichnet grundsätzlich die parallel zur Zylinderlängsachse verlaufende Mantelfläche, auch wenn diese abschnittsweise von der Zylinderform abweicht. Ein derart freiliegendes Bedienelement ist für eine Bedienperson, die mit ihrer Hand den gegenüberliegenden Greifabschnitt umgreift, mit ihren Fingern besonders gut erreichbar, insbesondere auch in ausgelenkten Stellungen des Bedienelements.

Nach einer Ausgestaltung bildet die Ausbuchtung auf zwei einander gegenüberliegenden Seiten Mulden zum Eingriff jeweils eines Fingers einer Bedienperson aus. Die Ausbuchtung kann also auf gegenüberliegenden Seiten jeweils eine Eingriffsmulde aufweisen, die zur Aufnahme eines Fingers einer Bedienperson ausgebildet ist. Bei Umgreifen des dem Bedienelement gegenüberliegenden Greifabschnitts mit der Hand kann die Bedienperson mit den Fingern dieser Hand, insbesondere mit Daumen und Zeigefinger, in diese Eingriffsmulden greifen. Die Eingriffsmulden erlauben einen sicheren Griff und einen guten Halt, insbesondere beim Verschwenken des Bedienelements um seine Zylinderlängsachse.

Nach einer Ausgestaltung weist das mindestens eine Bedienelement mindestens einen in der Mantelfläche ausgebildeten Bediennocken auf. Der Bediennocken erstreckt sich als Erhebung aus dem Bedienelement heraus. Beispielsweise kann der Bediennocken auf der Ausbuchtung sitzen. Auch kann der Bediennocken im Übergang zwischen der Ausbuchtung und dem zylinderförmigen Abschnitt des Bedienelements ausgebildet sein. Der Bediennocken kann insbesondere an einer Oberseite des Bedienelements ausgebildet sein, sodass er durch den Zeigefinger oder den Mittelfinger einer den gegenüberliegenden Greifabschnitt umgreifenden Hand kontaktiert werden kann. Sollte das Bedienelement mit einem aus dem Tragabschnitt hinausragenden Abschnitt in der angrenzenden Grifföffnung aufgenommen sein, so kann insbesondere auch der Bediennocken derart in der Grifföffnung aufgenommen sein, dass er nicht aus dieser hinausragt. Nach einer diesbezüglichen Ausgestaltung erstreckt sich der Bediennocken in einem steilen Winkel zu der Erstreckungsrichtung der Ausbuchtung. Der Bedienennocken kann sich beispielsweise in einem steilen Winkel von 70° bis 90° zu der Erstreckungsrichtung der Ausbuchtung erstrecken. Ein solcher Bediennocken dient insbesondere dem einfachen Angriff eines der Finger an das Bedienelement. Beispielsweise kann der Bediennocken bei entsprechender Anordnung an einer Oberseite des Bedienelements durch den Zeigefinger oder den Mittelfinger einer dem gegenüberliegenden Greifabschnitt umgreifenden Hand kontaktiert und durch eine Bewegung des Bediennockens das Bedienelement um seine Zylinderlängsachse verschwenkt werden. Der Bediennocken ermöglicht insbesondere eine einfache Ein-Fingerbedienung des Bedienelements. Beispielsweise kann durch Anlage der Fingerkuppe an eine zumindest in der Ruhestellung des Bedienelements dem Greifabschnitt zugewandte Frontfläche des Bediennockens das Bedienelement um eine erste Drehrichtung um die Zylinderlängsachse verschwenkt werden. Durch Angriff an eine Oberseite oder an eine zumindest in der Ruhestellung dem Tragabschnitt zugewandte Rückseite des Bediennockens mit der Fingerkuppe kann durch Heranziehen des Bediennockens zu der Hand das Bedienelement um die Zylinderlängsachse in die entgegengesetzte Drehrichtung verschwenkt werden. Somit ist auch in einfacher Weise eine Einhandbedienung bei dem Bedienelement ermöglicht.

Nach einer Ausgestaltung umfasst der Bedienkopf mindestens zwei an einem gemeinsamen Tragabschnitt angeordnete, zylinderförmige Bedienelemente mit jeweils einer sich von der jeweiligen Zylinderlängsachse radial forterstreckenden Ausbuchtung, wobei die Ausbuchtungen zumindest in einer Ruhestellung des jeweiligen Bedienelements zu dem jeweils gegenüberliegenden Greifabschnitt des Griffs hinweisen, wobei durch Angriff an der jeweiligen Ausbuchtung das jeweilige Bedienelement um seine Zylinderlängsachse verschwenkbar ist. Nach dieser Ausgestaltung sind also an zumindest einem der Tragabschnitte zumindest zwei der erfindungsgemäßen Bedienelemente vorgesehen. Die mindestens zwei Bedienelemente können insbesondere um dieselbe Zylinderlängsachse verschwenkbar sein. Das Vorsehen zumindest zweier erfindungsgemäßer Bedienelemente an einem Tragabschnitt erlaubt in einfacher Weise die intuitive Bedienung mehrerer Funktionen durch nur eine Hand. Beispielsweise kann eine Bedienperson, die mit ihrer Hand den gegenüberliegenden Greifabschnitt umgreift mit einem Zeigefinger ein erstes Bedienelement und mit dem Mittelfinger ein zweites Bedienelement der mindestens zwei Bedienelemente angreifen, insbesondere durch Kontakt an der jeweiligen Ausbuchtung. Die Bedienperson kann dabei auch mit dem Daumen in der erläuterten Weise konternd an das jeweilige Bedienelement angreifen. Beispielsweise kann das erste Bedienelement durch Verschwenkbarkeit in beide Drehrichtungen um seine Zylinderlängsachse das Heben bzw. Senken im Freihub und das zweite Bedienelement bei Verschwenkbarkeit in beiden Drehrichtungen um seine Zylinderlängsachse das Heben bzw. Senken im Masthub ermöglichen.

Nach einer Ausgestaltung umfasst der Bedienkopf mindestens einen seitlich an einem freien Ende des Horns angeordneten Fahrerschaltgriff, der um eine von dem Horn fort in Richtung eines der Greifabschnitte weisende Achse drehbar ist. Wie eingangs bereits angesprochen, können an dem dem ersten Ende gegenüberliegenden zweiten Ende des Horns ein oder mehrere Fahrerschaltgriffe angeordnet sein. Insbesondere können zwei Fahrerschaltgriffe auf gegenüberliegenden Seiten des freien Endes des Horns angeordnet sein. Der Fahrerschaltgriff weist in Richtung des angrenzenden Greifabschnitts. Der Greifabschnitt kann unmittelbar an dem Fahrerschaltgriff angrenzen. Auch kann der Greifabschnitt von dem Fahrerschaltgriff beabstandet sein. Die Achse, um die der Fahrerschaltgriff drehbar ist, kann parallel zu einer Erstreckungsachse des angrenzenden Greifabschnitts verlaufen oder in einem flachen Winkel zu dieser stehen.

Die Erfindung betrifft zudem eine Deichsel für ein Flurförderzeug mit einem zwischen einer annähernd aufrechten Stellung und einer schräg zur vertikalen geneigten Stellung um eine horizontale Achse verschwenkbaren Deichselstil und mit einem am freien Ende des Deichselstils angeordneten, erfindungsgemäßen Bedienkopf. Der Bedienkopf kann also einen Deichselkopf eines deichselbedienbaren Flurförderzeugs bilden. Wie eingangs bereits angesprochen, können insbesondere Mitgängerfahrzeuge über solche Deichseln verfügen. Der Deichselstil ist dabei zur einfachen Bedienbarkeit um die horizontale Achse verschwenkbar. Zudem ist der Deichselstil um eine vertikale Achse verschwenkbar und ermöglicht so die Lenkung des Flurförderzeugs nach links oder rechts durch entsprechendes Verschwenken eines mit dem Deichselstil gekoppelten Rades. Nach einer diesbezüglichen Ausgestaltung ist das mindestens eine Bedienelement über seine Ausbuchtung bei Umgreifen des der Ausbuchtung gegenüberliegenden Greifabschnitts durch die Hand einer Bedienperson von zwei gegenüberliegenden Seiten mit den Fingern dieser Hand greifbar, sowohl in der aufrechten Stellung als auch in der geneigten Stellung des Deichselstils. Wie bereits erläutert, kann das Bedienelement beispielsweise mit Zeigefinger und Daumen von gegenüberliegenden Seiten greifbar sein. Dient der Bedienkopf als Deichselkopf, so ist dies nach der vorliegenden Ausgestaltung insbesondere über die gesamte Schwenkbewegung der Deichsel um die horizontale Achse gewährleistet, also auch in einer aufrechten Stellung der Deichsel. Somit kann auch bei geringem Rangierraum die über das Bedienelement auszuführende Funktion zuverlässig ausgeführt werden.

Die Erfindung betrifft zudem eine Bedieneinheit für ein Flurförderzeug mit einer lediglich um eine vertikale Drehachse drehbaren Lenksäule und mit einem an der Lenksäule angeordneten, erfindungsgemäßen Bedienkopf. Der Bedienkopf kann, wie ebenfalls eingangs bereits angesprochen, nicht nur als Deichselkopf an einem Deichselstil angeordnet sein, sondern auch an einer Lenksäule. Der Bedienkopf ist hierbei mit der Lenksäule nur um eine vertikale Drehachse drehbar und insbesondere nicht um eine horizontale Achse verschwenkbar. Solche Bedieneinheiten sind insbesondere bei Flurförderzeugen vorgesehen, bei welchen die Bedienperson beispielsweise auf einer Standplattform mitfährt.

Die Erfindung betrifft zudem ein Flurförderzeug mit einem erfindungsgemäßen Deichselkopf bzw. ein Flurförderzeug mit einer erfindungsgemäßen Deichsel bzw. ein Flurförderzeug mit einer erfindungsgemäßen Bedienenheit.

Ausgestaltungen der Erfindung werden im Folgenden anhand von Figuren erläutert. Es zeigen:
- Figur 1: eine Deichsel mit einem erfindungsgemäßen Bedienkopf als Deichselkopf,
- Figur 2: einen erfindungsgemäßen Bedienkopf an einer Lenksäule,
- Figuren 3, 4: unterschiedliche Ansichten eines Deichselkopfes gemäß einer ersten Ausgestaltung,
- Figur 5: einen Deichselkopf gemäß einer zweiten Ausgestaltung,
- Figuren 6a-c,7a, 7b: Schnittansichten eins erfindungsgemäßen Deichselkopfes,
- Figuren 8a, b: unterschiedliche Ansichten eines Deichselkopfes gemäß einer dritten Ausgestaltung.

Soweit nichts anderes angegeben ist, bezeichnen im Folgenden gleiche Bezugszeichen gleiche Gegenstände.

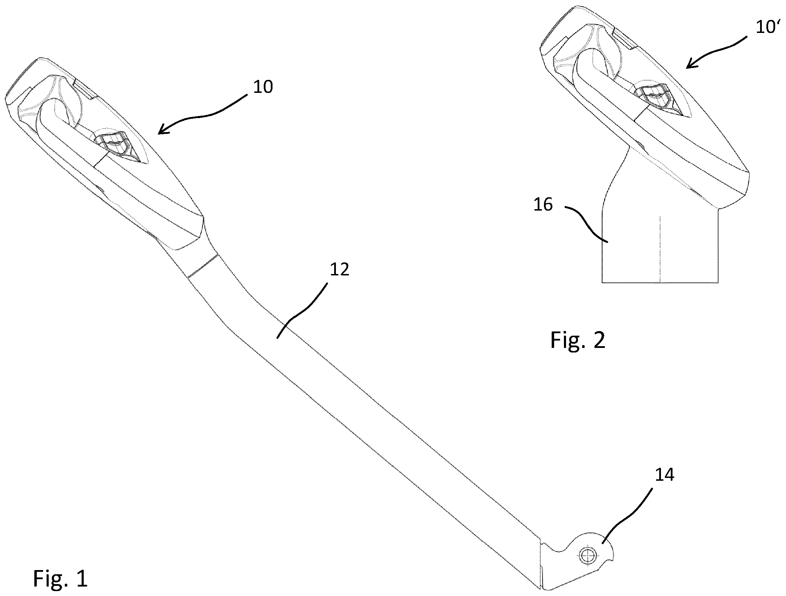

Figur 1 zeigt einen als Deichselkopf eingesetzten Bedienkopf 10. Der Bedienkopf 10 ist an einen Deichselstil 12 angebunden, der wiederum über eine Anbindung 14 mit einem nicht dargestellten Flurförderzeug verbunden werden kann. Die durch Bedienkopf 10 und Deichselstil 12 gebildete Deichsel kann dabei derart an ein Flurförderzeug angebunden werden, dass sie um eine senkrecht zu der Bildebene in Figur 1 stehende horizontale Achse nach oben und nach unten gegenüber dem Flurförderzeug verschwenkbar ist. Zudem kann die Deichsel bei entsprechender Aufhängung an einem Flurförderzeug auch um eine in der Bildebene der Figur 1 liegende vertikale Achse verschwenkt werden, wobei das Verschwenken um die vertikale Achse das Lenken eines in diesem Fall als Mitgänger ausgebildeten Flurförderzeugs ermöglicht.

Figur 2 zeigt einen erfindungsgemäßen Bedienkopf 10', der anstatt mit einem Deichselstil mit einer Lenksäule 16 verbunden ist. Über die Lenksäule 16 kann der Bedienkopf 10' um eine in Figur 2 in der Bildebene liegende vertikale Achse drehbar am Flurförderzeug gelagert sein. Der Bedienkopf und die Lenksäule bilden hierbei eine Bedieneinheit wie sie insbesondere bei Flurförderzeugen üblich ist, bei denen eine Bedienperson mitfahren kann, beispielsweise stehend auf einer Standplattform.

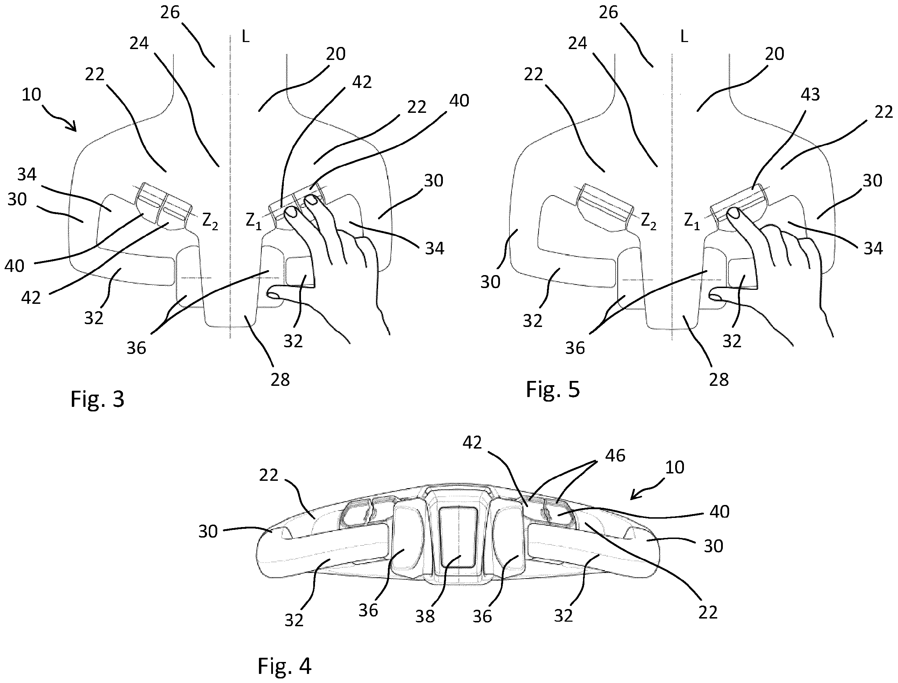

Für die Figuren 3 bis 7 wird unter Bezugnahme auf den als Deichselkopf ausgebildeten Bedienkopf 10 nachfolgend die Anordnung und Funktionsweise der Bedienelemente erläutert. Dies gilt jedoch grundsätzlich auch für den eben erläuterten Bedienkopf 10'.

Die Figuren 3 und 4 zeigen den Bedienkopf 10 in einer Draufsicht auf eine Oberseite bzw. in einer Frontansicht in Richtung einer Längsachse L des Bedienkopfes 10. Der Bedienkopf 10 umfasst ein Horn 20 mit zwei Tragabschnitten 22, die sich auf gegenüberliegenden Seiten eines zentralen Abschnitts 24 des Horns von der Längsachse L forterstrecken. Der zentrale Abschnitt 24 des Horns 20 erstreckt sich von einem zur Verbindung mit dem Deichselstil 12 ausgebildeten ersten Ende 26 zu einem dem ersten Ende 26 auf der Längsachse L gegenüberliegenden zweiten, freien Ende 28. An die Tragabschnitte 22 schließen sich stangenartige Griffe an, bestehend jeweils aus einem Schenkelabschnitt 30 und einem Greifabschnitt 32. Die Schenkelabschnitte 30 erstrecken sich jeweils fortweisend von ihren Tragabschnitten 22 im vorliegenden Ausführungsbeispiel in etwa parallel zu Längsachse L. Die Schenkelabschnitte 30 gehen wiederum jeweils in einen der Greifabschnitte 32 über. Die Greifabschnitte 32 weisen zu der Längsachse L hin, stehen insbesondere in etwa senkrecht zu dieser und damit auch in etwa senkrecht zu ihrem jeweiligen Schenkelabschnitt 30. Tragabschnitt 22, Schenkelabschnitte 30 sowie Greifabschnitt 32 begrenzen - insbesondere in Zusammenwirkung mit dem freien Ende 28 des Horns 20 - jeweils Grifföffnungen 34. Die Grifföffnungen 34 sind dabei vorliegend nicht vollständig umschlossen. Die Greifabschnitte 32 sind zum freien Ende des Horns 20 bzw. zu an dem freien Ende 28 an gegenüberliegenden Seiten angeordneten Fahrerschaltgriffen 36 beabstandet. An den Tragabschnitten 32 sind jeweils zwei Bedienelemente 40, 42 angeordnet.

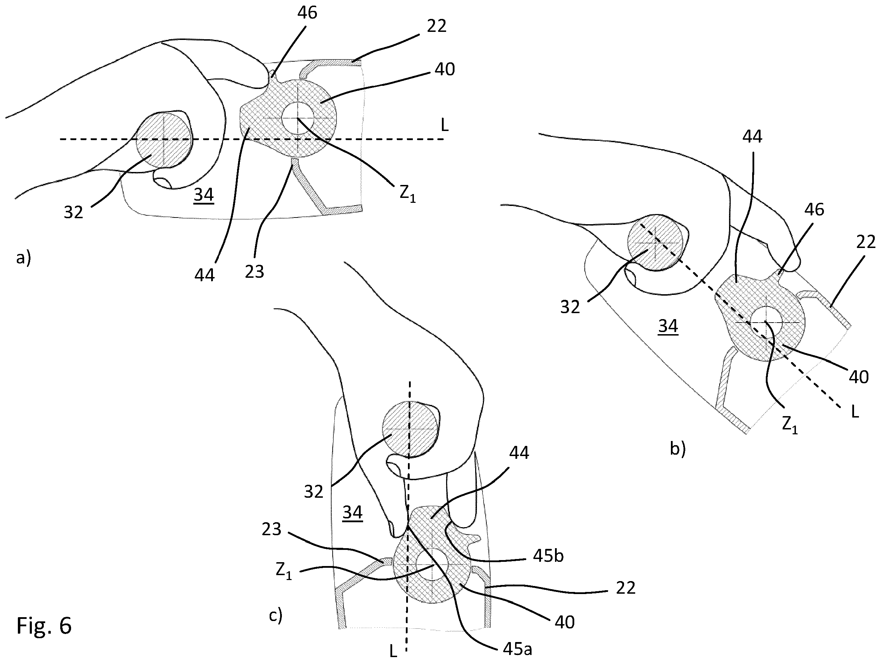

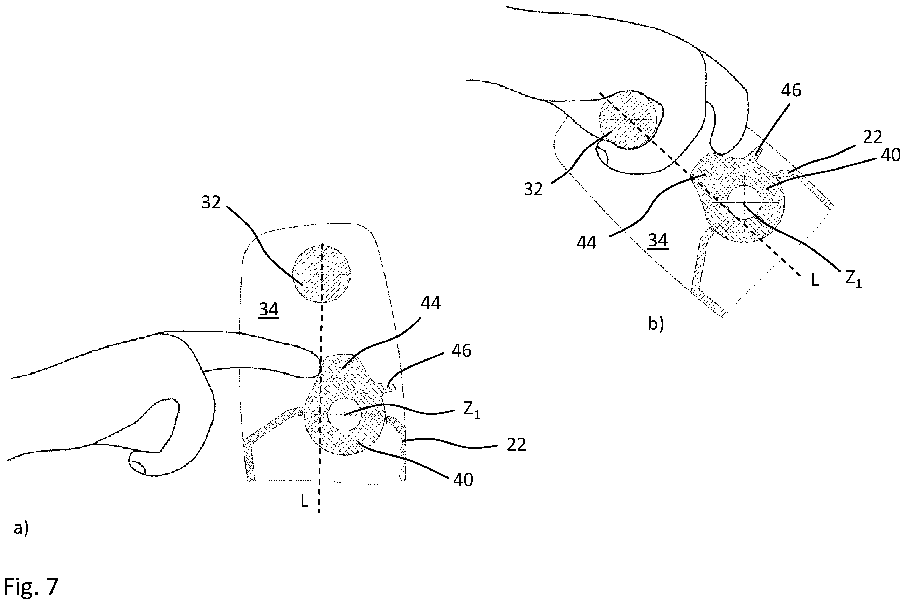

Die Bedienelemente 40, 42 sind zylinderförmig ausgebildet und verfügen jeweils über eine sich von ihrer jeweiligen Zylinderlängsachse Z₁, Z₂ radial forterstreckende Ausbuchtung 44, wie insbesondere in den Figuren 6 und 7 ersichtlich. Die rechten Bedienelemente 40, 42 sind um ihre gemeinsame Zylinderlängsachse Z₁ relativ zu ihrem Tragabschnitt 22 in beide Drehrichtungen verschwenkbar. Entsprechend sind die linken Bedienelemente 40, 42 um ihre gemeinsame Zylinderlängsachse Z₂ gegenüber ihrem Tragabschnitt 22 in beide Drehrichtungen verschwenkbar. Wie Figur 3 zu entnehmen, kann eine Bedienperson beispielsweise mit ihrer rechten Hand den rechten Greifabschnitt 32 umgreifen und in einfacher Weise mit dem Zeigefinger das Bedienelement 42 und mit dem Mittelfinger das Bedienelement 40 kontaktieren. Mit dem Daumen kann die Bedienperson zudem den rechten Fahrerschaltgriff 36 bedienen. Durch ein Drehen der Fahrerschaltgriff 36 um ihre jeweiligen Drehachsen kann das Fahrzeug vor- und zurück bewegt werden. Über die Bedienelemente 40, 42 können weitere Funktionen des Flurförderzeugs bedient werden. Beispielsweise kann über das Bedienelement 42 der Freihub eines Lastteils des Flurförderzeugs durchfahren und mit dem Bedienelement 40 der Masthub des Lastteils durchfahren werden. Somit können in einfacher Weise mit nur einer Hand und ohne Umgreifen mehrere Funktionen ausgeführt werden.

Figur 5 zeigt eine Ausgestaltung des Deichselkopfes 10, bei dem pro Seite, also pro Tragabschnitt 22, jeweils nur ein zylinderförmiges Bedienelement 43 vorgesehen ist. Auch dieses kann bei entsprechendem Griff durch die Bedienperson einfach erreicht werden und in beiden Drehrichtungen mit nur einem Finger bedient werden.

Die Bedienbarkeit der Bedienelemente 40, 42 bzw. 43 wird anhand der Figuren 6 und 7 im Folgenden erläutert. Die Figuren 6a bis 6c zeigen den Bedienkopf 10 in einer Schnittansicht bei unterschiedlichem Neigewinkel der Deichsel. Der Deichselstil 12 ist hierbei nicht ersichtlich. In Figur 6a ist die Deichsel derart weit um ihre horizontale Achse geneigt, dass die Längsachse L des Deichselkopfes im Wesentlichen horizontal verläuft. Wie hier deutlich wird, verfügen die Bedienelemente 40, 42 bzw. 43 auch über in einer Mantelfläche ausgebildete Bediennocken 46, die sich jeweils im Wesentlichen senkrecht zur Erstreckungsrichtung der Ausbuchtung 44 erstrecken. In Figur 6a umgreift eine Bedienperson mit ihrer Hand den Greifabschnitt 32 und kontaktiert mit der Kuppe ihres Zeigefingers den Bediennocken 46 an einer dem Greifabschnitt 32 zugewandten Frontfläche. Das Bedienelement 40 befindet sich hierbei in einer Ruhestellung. Hierbei ist auch ersichtlich, dass sich die Ausbuchtung 44 von dem zylinderförmigen Grundkörper des Bedienelements 40 in Richtung des Greifabschnitts 32 erstreckt. Insbesondere ist erkennbar, dass das Bedienelement 40 abschnittsweise aus einer dem Greifabschnitt 32 zugewandten Frontfläche 23 des Tragabschnitts 22 hinausragt. Das Bedienelement 40 kann insbesondere derart weit aus dem Tragabschnitt 22 hinausragen, dass mindestens 50% seiner Mantelfläche freiliegen. Der aus dem Tragabschnitt 22 hinausragende Teil des Bedienelements 40 ist dabei vollständig in der angrenzenden Grifföffnung 34 aufgenommen. Aufgrund dieser Merkmale ist das Bedienelement 40 besonders gut für eine Bedienperson erreichbar, die den gegenüberliegenden Greifabschnitt mit ihrer Hand umgreift. Selbiges gilt entsprechend für die Bedienelemente 42 und 43.

Durch ihren Angriff an die Frontfläche des Bediennockens 46 kann eine Bedienperson nun mit dem Zeigefinger das Bedienelement 40 entlang einer ersten Drehrichtung um ihre Zylinderlängsachse Z₁, die vorliegend senkrecht zur Bildebene steht, verschwenken. Wie in Figur 6b zu sehen, kann durch Angriff mit dem Zeigefinger auf eine Oberseite des Bediennockens 46 das Bedienelement 40 entsprechend auch in entgegengesetzter Drehrichtung um die Zylinderlängsachse Z₁ verschränkt werden. Somit ist eine einfache Ein-Fingerbedienung über den Bediennocken möglich.

Insbesondere ermöglicht die erfindungsgemäße Ausbuchtung an den Bedienelementen jedoch, die Bedienelemente von zwei gegenüberliegenden Seiten mit den Fingern zu greifen, wie Figur 6c zu entnehmen. Hierbei greift die Bedienperson in kleine Mulden 45 auf gegenüberliegenden Seiten der Ausbuchtung 44 ein, mit dem Daumen in die eine Mulde 45a und mit dem Zeigefinger in die gegenüberliegende Mulde 45b. Das Bedienelement 40 kann somit insbesondere bei beliebiger Deichselneigung in einfacher Weise von Daumen und Zeigefinger gegriffen und somit in beide Drehrichtungen um seine Zylinderlängsachse Z₁ verschwenkt werden.

Die Figuren 7a und 7b zeigen wiederum unterschiedliche Neigungen der Deichsel. Hierbei ist ersichtlich, dass auch über die Ausbuchtung 44 eine einfache Ein-Fingerbedienung ermöglicht wird. So kann auch bei annähernd aufrechter Stellung der Deichsel das Bedienelement 40 durch Fortdrücken der Ausbuchtung beispielsweise mit dem Zeigefinger einer Bedienperson in eine Richtung bewegt werden. Die Bewegung in die entgegengesetzte Drehrichtung kann ebenfalls durch einen Finger zumindest bei leicht geneigter Deichsel erreicht werden, wie Figur 7b zu entnehmen. Die Bedienung ist hierbei sehr intuitiv, da das Bedienelement unabhängig von der Ausrichtung des Deichselkopfes bei gleicher Drehrichtung um die Zylinderachse auch stets dieselbe Funktion ausführt, beispielsweise das Heben des Lastteils. Dies ist insbesondere gegenüber den eingangs erwähnten paddelförmigen Schaltwippen von Vorteil, die abhängig von der Stellung des Deichselkopfes eine Änderung der Bedienrichtung erfordern, um dieselbe Funktion auszuführen. So muss bei solchen paddelförmigen Schaltwippen beispielsweise zum Heben des Lastteils bei Angriff von oben die Schaltwippe links und bei Angriff von unten die Schaltwippe rechts bedient werden.

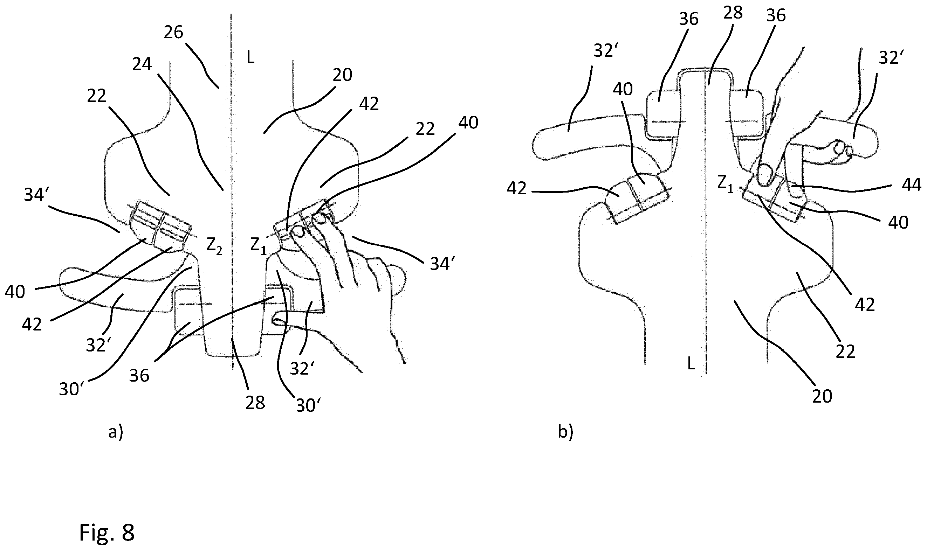

Figuren 8a und 8b zeigen eine weitere Ausgestaltung eines erfindungsgemäßen Bedienkopfes. Dieser unterscheidet sich von dem Bedienkopf aus Figur 3 lediglich durch seine Griffe. So schließen die Schenkelabschnitte 30' nicht seitlich an die Tragabschnitte 22 an sondern erstrecken sich mittig von dem Horn 20 in einem Winkel zu der Längsachse L fort. An die Schenkelabschnitte 30' schließen seitlich, im Wesentlichen senkrecht von der Längsachse L forterstreckende Greifabschnitte 32' an. Die Grifföffnungen 34' sind hierbei seitlich geöffnet und nur durch die Tragabschnitte 22, die jeweils gegenüberliegenden Greifabschnitte 32' und das freie Ende 28 des Horns 20 begrenzt. Figur 8a zeigt den Bedienkopf von oben. Wie hier gut erkennbar, können die Bedienelemente 40, 42 mit unterschiedlichen Fingern gleichzeitig einfach und ohne Umgreifen bedient werden. Figur 8b zeigt den Bedienkopf von unten. Hier ist erkennbar, dass eine den gegenüberliegenden Greifabschnitt 32' mit der Hand umgreifende Bedienperson in die Bedienelemente 40, 42 von oben und unten mit Daumen und Zeigefinger bzw. Mittelfinger gleichzeitig greifen kann.

### Bezugszeichenliste

- 10: Deichselkopf
- 12: Deichselstil
- 20: Horn
- 22: Tragabschnitt
- 23: Frontfläche
- 24: Zentraler Abschnitt
- 26: Erstes Ende
- 28: Freies Ende
- 30, 30': Schenkelabschnitt
- 32, 32': Greifabschnitt
- 34, 34': Grifföffnung
- 36: Fahrerschaltgriff
- 40,42,43: Bedienelement
- 44: Ausbuchtung
- 45, 45a, b: Mulde
- 46: Bediennocken
- L: Längsachse
- Z₁, Z₂: Schwenkachsen

## Patentansprüche

1. Bedienkopf für ein Flurförderzeug, umfassend ein sich entlang einer Längsachse (L) erstreckendes Horn (20) mit sich auf gegenüberliegenden Seiten des Horns (20) von der Längsachse (L) forterstreckenden Tragabschnitten (22), und umfassend mit dem Horn (20) verbundene Griffe mit jeweils gegenüberliegend der Tragabschnitte (22) angeordneten Greifabschnitten (32), wobei die einander gegenüberliegenden Tragabschnitte (22) und Greifabschnitte (32) jeweils durch eine Grifföffnung (34) voneinander beabstandet sind, wobei an zumindest einem der Tragabschnitte (22) mindestens ein Bedienelement (40, 42, 43) angeordnet ist, **dadurch gekennzeichnet, dass** das mindestens eine Bedienelement (40, 42, 43) zylinderförmig ausgebildet ist mit einer sich von der Zylinderlängsachse (Z₁, Z₂) radial forterstreckenden Ausbuchtung (44), die zumindest in einer Ruhestellung des Bedienelements (40, 42, 43) zu dem gegenüberliegenden Greifabschnitt (32) des Griffs hinweist, wobei durch Angriff an der Ausbuchtung (44) das Bedienelement (40, 42, 43) um seine Zylinderlängsachse verschwenkbar ist.

2. Bedienkopf nach Anspruch 1, **dadurch gekennzeichnet, dass** bei Umgreifen des der Ausbuchtung (44) gegenüberliegenden Greifabschnitts (32) durch die Hand einer Bedienperson das Bedienelement (40, 42, 43) über seine Ausbuchtung (44) von zwei gegenüberliegenden Seiten mit den Fingern dieser Hand greifbar ist.

3. Bedienkopf nach Anspruch 1 oder 2, **dadurch gekennzeichnet, dass** das mindestens eine Bedienelement (40, 42, 43) in beiden, einander entgegengesetzten Drehrichtungen um seine Zylinderlängsachse (Z₁, Z₂) verschwenkbar ausgebildet ist.

4. Bedienkopf nach einem der vorhergehenden Ansprüche, **dadurch gekennzeichnet, dass** das mindestens eine Bedienelement (40, 42, 43) zumindest abschnittsweise aus seinem Tragabschnitt (22) hinausragt, wobei der aus dem Tragabschnitt (22) hinausragende Abschnitt des Bedienelements (40, 42, 43) vollständig in der angrenzenden Grifföffnung (34) aufgenommen ist.

5. Bedienkopf nach Anspruch 4, **dadurch gekennzeichnet, dass** das mindestens eine Bedienelement (40, 42, 43) derart aus dem Tragabschnitt (22) hinausragt, dass zumindest 50% einer Mantelfläche des Bedienelements freiliegen.

6. Bedienkopf nach einem der vorhergehenden Ansprüche, **dadurch gekennzeichnet, dass** die Ausbuchtung (44) auf zwei einander gegenüberliegenden Seiten Mulden (45a, 45b) zum Eingriff jeweils eines Fingers einer Bedienperson ausbildet.

7. Bedienkopf nach einem der vorhergehenden Ansprüche, **dadurch gekennzeichnet, dass** das mindestens eine Bedienelement (40, 42, 43) einen in der Mantelfläche ausgebildeten Bediennocken (46) aufweist.

8. Bedienkopf nach Anspruch 7, **dadurch gekennzeichnet, dass** sich der Bediennocken (46) in einem steilen Winkel, insbesondere im Wesentlichen senkrecht, zur Erstreckungsrichtung der Ausbuchtung (44) erstreckt.

9. Bedienkopf nach einem der vorhergehenden Ansprüche, **gekennzeichnet durch** mindestens zwei an einem gemeinsamen Tragabschnitt (22) angeordnete, zylinderförmige Bedienelemente (40, 42) mit jeweils einer sich von der jeweiligen Zylinderlängsachse (Z₁, Z₂) radial forterstreckenden Ausbuchtung (44), wobei die Ausbuchtungen (44) zumindest in einer Ruhestellung des jeweiligen Bedienelements (40, 42) zu dem dem gemeinsamen Tragabschnitt (22) gegenüberliegenden Greifabschnitt (32) des Griffs hinweisen, wobei durch Angriff an der jeweiligen Ausbuchtung (44) das jeweilige Bedienelement (40, 42) um seine Zylinderlängsachse (Z₁, Z₂) verschwenkbar ist.

10. Bedienkopf nach einem der vorhergehenden Ansprüche, **gekennzeichnet durch** mindestens einen seitlich an einem freien Ende des Horns (20) angeordneten Fahrerschaltgriff (36), der um eine von dem Horn (20) fort in Richtung eines der Greifabschnitte (32) weisende Achse drehbar ist.

11. Deichsel für ein Flurförderzeug mit einem zwischen einer annähernd aufrechten Stellung und einer schräg zur Vertikalen geneigten Stellung um eine horizontale Achse verschwenkbaren Deichselstiel (12) und mit einem am freien Ende des Deichselstiels (12) angeordneten Bedienkopf (10) nach einem der vorhergehenden Ansprüche.

12. Deichsel nach Anspruch 11, **dadurch gekennzeichnet, dass** das mindestens eine Bedienelement (40, 42, 43) über seine Ausbuchtung (44) bei Umgreifen des der Ausbuchtung (44) gegenüberliegenden Greifabschnitts (32) durch die Hand einer Bedienperson von zwei gegenüberliegenden Seiten mit den Fingern dieser Hand greifbar ist, sowohl in der aufrechten Stellung als auch in der geneigten Stellung des Deichselstiels.

13. Bedieneinheit für ein Flurförderzeug mit einer lediglich um eine vertikale Drehachse drehbaren Lenksäule (16) und mit einem an der Lenksäule (16) angeordneten Bedienkopf (10') nach einem der Ansprüche 1 bis 10.

14. Flurförderzeug mit einem Bedienkopf nach einem der Ansprüche 1 bis 10 oder mit einer Deichsel nach einem der Ansprüche 11 oder 12 oder mit einer Bedieneinheit nach Anspruch 13.

## Claims

1. An operating head for an industrial truck, comprising a horn (20) that extends along a longitudinal axis (L) and that comprises support portions (22) extending from the longitudinal axis (L) on opposite sides of the horn (20), and comprising handles that are connected to the horn (20) and that comprise gripping portions (32) arranged in each case opposite the support portions (22), wherein the opposing support portions (22) and gripping portions (32) are in each case spaced apart from one another by means of a handle opening (34), wherein at least one operating element (40, 42, 43) is arranged on at least one of the support portions (22), **characterized in that** the at least one operating element (40, 42, 43) is cylindrical with a protrusion (44) that extends radially from the cylinder longitudinal axis (Z₁, Z₂) and that points toward the opposing gripping portion (32) of the handle at least in a rest position of the operating element (40, 42, 43), wherein the operating element (40, 42, 43) can be pivoted about its cylinder longitudinal axis by means of action on the protrusion (44).

2. The operating head according to claim 1, **characterized in that**, when the hand of an operator grips around the gripping portion (32) opposite the protrusion (44), the operating element (40, 42, 43) can be gripped via its protrusion (44) from two opposite sides with the fingers of said hand.

3. The operating head according to claim 1 or 2, **characterized in that** the at least one operating element (40, 42, 43) is designed to be pivotable about its cylinder longitudinal axis (Z₁, Z₂) in both, mutually opposing directions of rotation.

4. The operating head according to any one of the preceding claims, **characterized in that** the at least one operating element (40, 42, 43) projects at least in portions from its support portion (22), wherein the portion of the operating element (40, 42, 43) that projects from the support portion (22) is received completely in the adjacent handle opening (34).

5. The operating head according to claim 4, **characterized in that** the at least one operating element (40, 42, 43) projects from the support portion (22) such that at least 50% of an outer surface of the operating element is exposed.

6. The operating head according to any one of the preceding claims, **characterized in that** the protrusion (44) forms depressions (45a, 45b) on two opposing sides for engaging one finger of the operator in each case.

7. The operating head according to any one of the preceding claims, **characterized in that** the at least one operating element (40, 42, 43) comprises an operating cam (46) formed in the outer surface.

8. The operating head according to claim 7, **characterized in that** the operating cam (46) extends at a steep angle, in particular substantially perpendicularly, to the direction of extension of the protrusion (44).

9. The operating head according to any one of the preceding claims, **characterized by** at least two cylindrical operating elements (40, 42) that are arranged on a common support portion (22) and that each comprise a protrusion (44) that extends radially from the relevant cylinder longitudinal axis (Z₁, Z₂), wherein the protrusions (44) point toward the gripping portion (32) of the handle opposite the common support portion (22) at least in a rest position of the relevant operating element (40, 42), wherein the relevant operating element (40, 42) can be pivoted about its cylinder longitudinal axis (Z₁, Z₂) by means of action on the relevant protrusion (44).

10. The operating head according to any one of the preceding claims, **characterized by** at least one driver gearshift handle (36) that is arranged to the side on a free end of the horn (20) and that can be rotated about an axis pointing from the horn (20) in the direction of one of the gripping portions (32).

11. A tiller for an industrial truck comprising a tiller shaft (12) that can be pivoted about a horizontal axis between an approximately upright position and a position inclined with respect to the vertical and comprising an operating head (10) according to any one of the preceding claims arranged on the free end of the tiller shaft (12).

12. The tiller according to claim 11, **characterized in that**, when the hand of an operator grips around the gripping portion (32) opposite the protrusion (44), the at least one operating element (40, 42, 43) can be gripped via its protrusion (44) from two opposite sides with the fingers of said hand, both in the upright position and in the inclined position of the tiller shaft.

13. An operating unit for an industrial truck comprising a steering column (16) that can only be rotated about a vertical axis of rotation and comprising an operating head (10') according to any one of claims 1 to 10 arranged on the steering column (16).

14. An industrial truck comprising an operating head according to any one of claims 1 to 10 or comprising a tiller according to any one of claims 11 or 12 or comprising an operating unit according to claim 13.

## Revendications

1. Tête de commande pour un chariot de manutention, comportant un cornet (20) s'étendant le long d'un axe longitudinal (L) avec des sections de support (22) s'étendant à partir de l'axe longitudinal (L) sur des côtés opposés du cornet (20), et comportant des poignées reliées au cornet (20) avec des sections de préhension (32) disposées respectivement en face des sections de support (22), dans laquelle les sections de support (22) et les sections de préhension (32) opposées les unes aux autres sont respectivement espacées les unes des autres par une ouverture de poignée (34), dans laquelle au moins un élément de commande (40, 42, 43) est disposé sur l'une au moins des sections de support (22), **caractérisée en ce que** l'au moins un élément de commande (40, 42, 43) présente une configuration cylindrique avec un bombement (44) s'étendant radialement à partir de l'axe longitudinal de cylindre (Z₁, Z₂), lequel est orienté vers la section de préhension (32) opposée de la poignée, au moins dans une position de repos de l'élément de commande (40, 42, 43), l'élément de commande (40, 42, 43) pouvant être pivoté autour de son axe longitudinal de cylindre par contact avec le bombement (44).

2. Tête de commande selon la revendication 1, **caractérisée en ce que** lors d'une saisie de la section de préhension (32) opposée au bombement (44) par la main d'un opérateur, l'élément de commande (40, 42, 43) peut être saisi avec les doigts de cette main par deux côtés opposés par le biais de son bombement (44).

3. Tête de commande selon la revendication 1 ou 2, **caractérisée en ce que** l'au moins un élément de commande (40, 42, 43) est conçu de manière à pouvoir pivoter dans deux directions de rotation opposées autour de son axe longitudinal de cylindre (Z₁, Z₂).

4. Tête de commande selon l'une des revendications précédentes, **caractérisée en ce que** l'au moins un élément de commande (40, 42, 43) fait saillie au moins partiellement hors de sa section de support (22), dans laquelle la section de l'élément de commande (40, 42, 43) faisant saillie hors de la section de support (22) est entièrement reçue dans l'ouverture de poignée (34) adjacente.

5. Tête de commande selon la revendication 4, **caractérisée en ce que** l'au moins un élément de commande (40, 42, 43) fait saillie de telle façon hors de la section de support (22), qu'au moins 50% d'une surface d'enveloppe de l'élément de commande sont exposés.

6. Tête de commande selon l'une des revendications précédentes, **caractérisée en ce que** le bombement (44) forme des creux (45a, 45b) sur deux côtés opposés l'un à l'autre, respectivement pour l'introduction d'un doigt d'un opérateur.

7. Tête de commande selon l'une des revendications précédentes, **caractérisée en ce que** l'au moins un élément de commande (40, 42, 43) présente un ergot de commande (46) formé dans la surface d'enveloppe.

8. Tête de commande selon la revendication 7, **caractérisée en ce que** l'ergot de commande (46) s'étend selon un angle abrupt, en particulier essentiellement perpendiculairement, par rapport à la direction d'extension du bombement (44).

9. Tête de commande selon l'une des revendications précédentes, **caractérisée par** au moins deux éléments de commande (40, 42) cylindriques disposés sur une section de support commune (22), respectivement avec un bombement (44) s'étendant radialement à partir de l'axe longitudinal de cylindre (Z₁, Z₂) respectif, dans laquelle les bombements (44) sont orientés vers la section de préhension (32) de la poignée opposée à la section de support commune (22), au moins dans une position de repos de l'élément de commande (40, 42) respectif, l'élément de commande (40, 42) respectif pouvant être pivoté autour de son axe longitudinal de cylindre (Z₁, Z₂) par contact avec le bombement (44) respectif.

10. Tête de commande selon l'une des revendications précédentes, **caractérisée par** au moins une poignée de manœuvre de conducteur (36) disposée latéralement à une extrémité libre du cornet (20), laquelle peut tourner autour d'un axe orienté à distance du cornet (20) dans la direction de l'une des sections de préhension (32).

11. Timon pour un chariot de manutention, avec une tige de timon (12) apte à pivoter autour d'un axe horizontal entre une position approximativement droite et une position inclinée en biais par rapport à la verticale, et avec une tête de commande (10) selon l'une des revendications précédentes, disposée à l'extrémité libre de la tige de timon (12).

12. Timon selon la revendication 11, **caractérisé en ce que** l'au moins un élément de commande (40, 42, 43) peut être saisi par le biais de son bombement (44) lors de la saisie de la section de préhension (32) opposée au bombement (44) par la main d'un opérateur, par deux côtés opposés avec les doigts de cette main, aussi bien dans la position droite que dans la position inclinée de la tige de timon.

13. Unité de commande pour un chariot de manutention, avec une colonne de direction (16) rotative uniquement autour d'un axe de rotation vertical et avec une tête de commande (10') selon l'une des revendications 1 à 10, disposée sur la colonne de direction (16).

14. Chariot de manutention avec une tête de commande selon l'une des revendications 1 à 10 ou avec un timon selon l'une des revendications 11 ou 12 ou avec une unité de commande selon la revendication 13.
